(19) Europäisches Patentamt
European Patent Office
Office européen des brevets

(11) **EP 3 905 656 B1**

(12) **EUROPEAN PATENT SPECIFICATION**

(45) Date of publication and mention
of the grant of the patent:
**24.09.2025 Bulletin 2025/39**

(21) Application number: **19901428.3**

(22) Date of filing: **10.12.2019**

(51) International Patent Classification (IPC):
*H04N 23/68* (2023.01)    *H04N 23/951* (2023.01)
*G06T 5/50* (2006.01)

(52) Cooperative Patent Classification (CPC):
**G06T 5/50; H04N 23/6812; H04N 23/683;**
**H04N 23/951;** G06T 2207/20221

(86) International application number:
**PCT/JP2019/048187**

(87) International publication number:
**WO 2020/137503 (02.07.2020 Gazette 2020/27)**

(54) **IMAGE PROCESSING DEVICE**

BILDERZEUGUNGSVORRICHTUNG

DISPOSITIF DE TRAITEMENT D'IMAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.12.2018   JP 2018244507**

(43) Date of publication of application:
**03.11.2021 Bulletin 2021/44**

(73) Proprietor: **Sony Semiconductor Solutions**
**Corporation**
**Atsugi-shi, Kanagawa 243-0014 (JP)**

(72) Inventor: **KOBAYASHI, Daita**
**Atsugi-shi, Kanagawa 243-0014 (JP)**

(74) Representative: **Müller Hoffmann & Partner**
**Patentanwälte mbB**
**St.-Martin-Straße 58**
**81541 München (DE)**

(56) References cited:
**WO-A1-2017/187691       WO-A1-2017/187691**
**WO-A1-2018/025659       WO-A1-2018/025659**
**JP-A- 2007 116 310       JP-A- 2017 058 660**
**JP-A- 2017 058 660       US-A1- 2019 281 221**
**US-A1- 2020 228 728**

EP 3 905 656 B1

**Description**

Technical Field

The present disclosure relates to an image processing device that performs correction processing on a captured image.

Background Art

There is a technology of electronic image stabilization (EIS: Electronic Image Stabilization) to perform image stabilization by image processing on a captured image. With typical electronic image stabilization on a moving image, it is possible to correct an interframe blur for a plurality of captured images; however, it is difficult to correct an intra-frame blur. To cope with this, for example, a technique has been proposed in which continuous shooting is performed at a frame rate N times higher than normal, and image stabilization is performed on each of a plurality of captured images that is N times greater in number than normal, following which addition processing of superimposing N captured images on each other is performed to thereby acquire a moving image with reduced blur (see PTL 1).

Citation List

Patent Literature

PTL 1: Japanese Unexamined Patent Application Publication No. 2009-105533

Document WO 2017/187691 A1 (SONY CORPORATION) 02-11-2017 discloses an image processing apparatus including a cutout processing unit, a synthesis processing unit and a rotation correction unit. Each time an input frame is imaged by an imaging unit, the cutout processing unit cuts out a part of the input frame as a current cutout frame on the basis of motion of the imaging unit. The synthesis processing unit synthesizes the current cutout frame and the past cutout frame, and outputs a result as a synthesis frame. The rotation correction unit rotates a part of the synthesis frame on the basis of the detected roll angle and outputs an output frame.

Document JP 2017 058660 A (CANON KK) 2017-03-23 discloses an imaging device performing trapezoidal distortion correction, caused by the inclination of the camera, in addition to roll rotation correction of the image.

Summary of the Invention

Correction processing on a plurality of captured images acquired at a high frame rate is high in processing load. This leads to a delay in processing by a processor in an image processing device, thus making it difficult to perform processing in real time. It is desirable to provide an image processing device that makes it possible to reduce load of correction processing on a plurality of captured images.

The invention is defined by the appended claims. References to embodiments which do not fall under the scope of the claims are to be understood as examples useful for understanding the invention.

An image processing device according to an embodiment of the present disclosure includes: a first correction processing section that performs, on each of a plurality of captured images captured by an imaging device, first correction processing on a basis of posture information of the imaging device and generates a plurality of first corrected images; an addition processing section that performs addition processing on at least two first corrected images among the plurality of first corrected images generated by the first correction processing section and generates an addition image; and a second correction processing section that performs, on the addition image generated by the addition processing section, second correction processing higher in processing load than the first correction processing and generates a second corrected image.

In the image processing device according to the embodiment of the present disclosure, the addition image is generated by performing the addition processing on at least two first corrected images among the plurality of first corrected images generated by the first processing section, and thereafter, the second correction processing higher in processing load than the first correction processing is performed on the addition image.

Brief Description of the Drawings

[FIG. 1] FIG. 1 is an explanatory diagram schematically illustrating an outline of typical electronic image stabilization.
[FIG. 2] FIG. 2 is a flowchart illustrating an outline of an operation of an imaging system according to a comparative

EP 3 905 656 B1

example.

[FIG. 3] FIG. 3 is an explanatory diagram schematically illustrating an outline of correction processing on an image in an image processing device according to a comparative example.

[FIG. 4] FIG. 4 is an explanatory diagram schematically illustrating pixel coordinates upon occurrence of hand-induced shake of the imaging device.

[FIG. 5] FIG. 5 is a block diagram schematically illustrating a configuration example of an imaging system including an image processing device according to a first embodiment of the present disclosure.

[FIG. 6] FIG. 6 is a flowchart illustrating an outline of an operation of the imaging system according to the first embodiment.

[FIG. 7] FIG. 7 is an explanatory diagram schematically illustrating an outline of correction processing on an image in the image processing device according to the first embodiment.

[FIG. 8] FIG. 8 is an explanatory diagram schematically illustrating an outline of translation processing on an image in the image processing device according to the first embodiment.

[FIG. 9] FIG. 9 is an explanatory diagram schematically illustrating an outline of distortion correction processing and rotation correction processing on an image in the image processing device according to the first embodiment.

[FIG. 10] FIG. 10 is a block diagram schematically illustrating a configuration example of an imaging system including an image processing device according to a second embodiment of the present disclosure.

[FIG. 11] FIG. 11 is a flowchart illustrating an outline of an operation of the imaging system according to the second embodiment.

[FIG. 12] FIG. 12 is a block diagram schematically illustrating a first configuration example of an imaging system including an image processing device according to a third embodiment of the present disclosure.

[FIG. 13] FIG. 13 is a block diagram schematically illustrating a second configuration example of the imaging system including an image processing device according to the third embodiment of the present disclosure.

[FIG. 14] FIG. 14 is a block diagram depicting an example of schematic configuration of a vehicle control system.

[FIG. 15] FIG. 15 is a diagram of assistance in explaining an example of installation positions of an outside-vehicle information detecting section and an imaging section.

Modes for Carrying Out the Invention

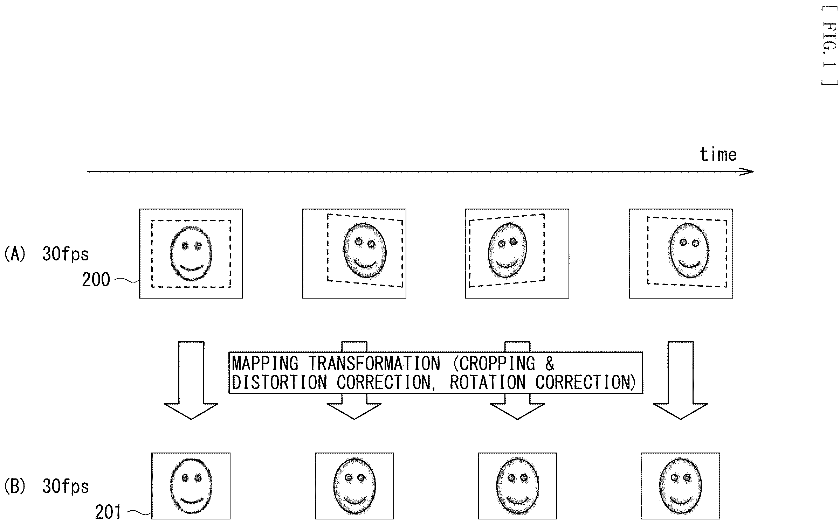

In the following, embodiments of the present disclosure will be described in detail with reference to the drawings. Note that the description will be given in the following order. 0. Comparative Example (FIGs. 1 to 4)

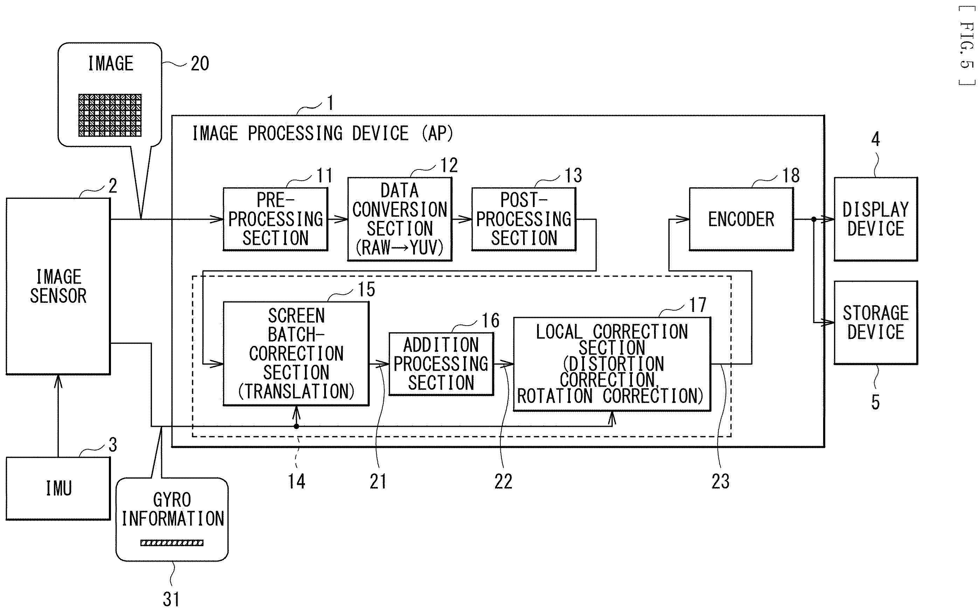

1. First Embodiment (FIGs. 5 to 9)

1.1. Configuration
1.2. Operation
1.3. Effects

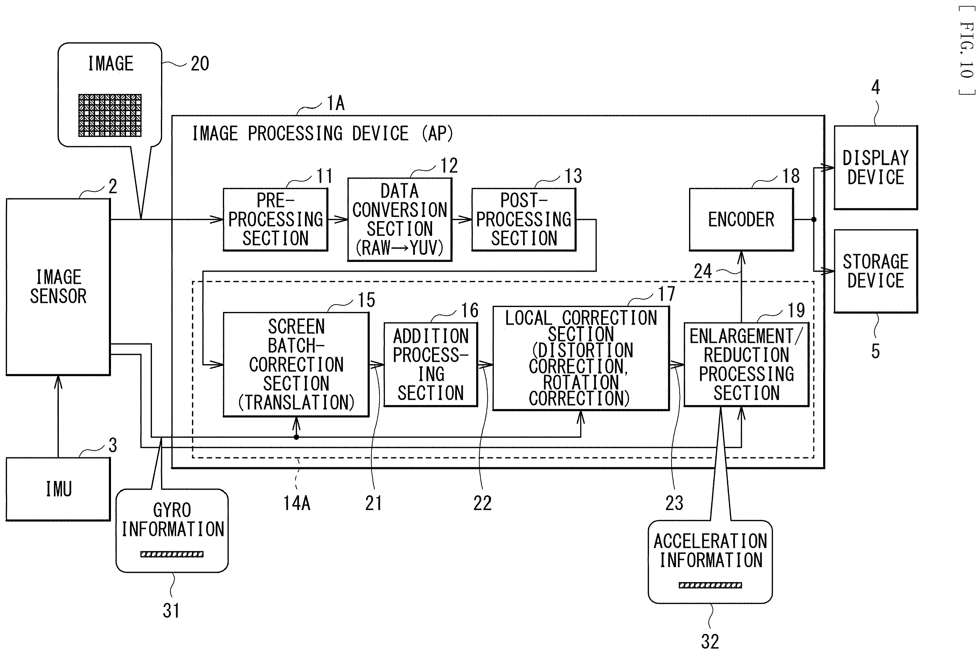

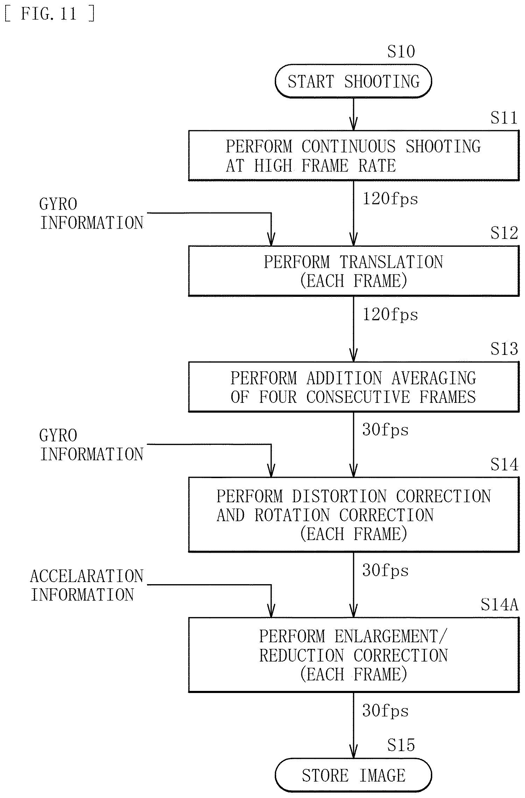

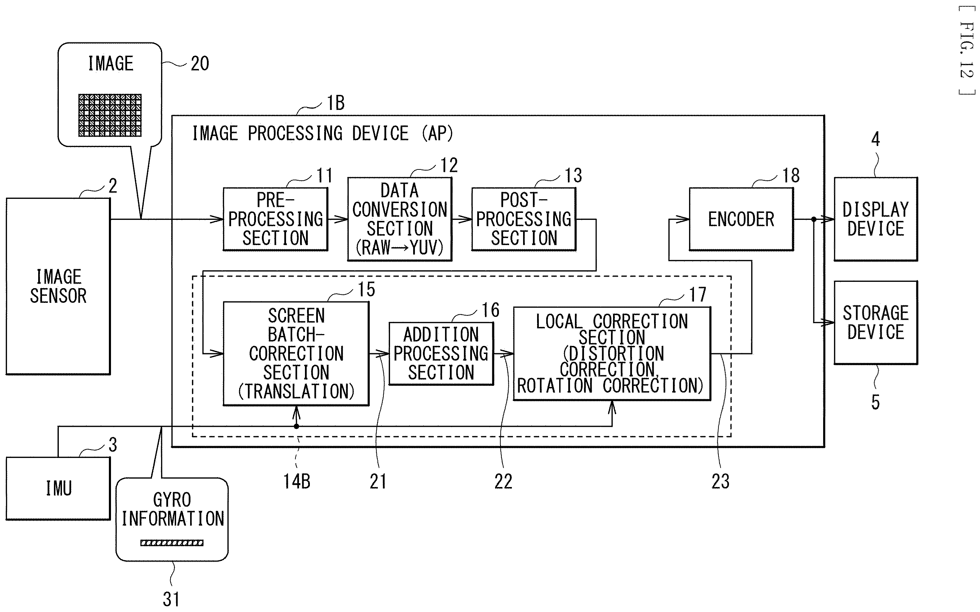

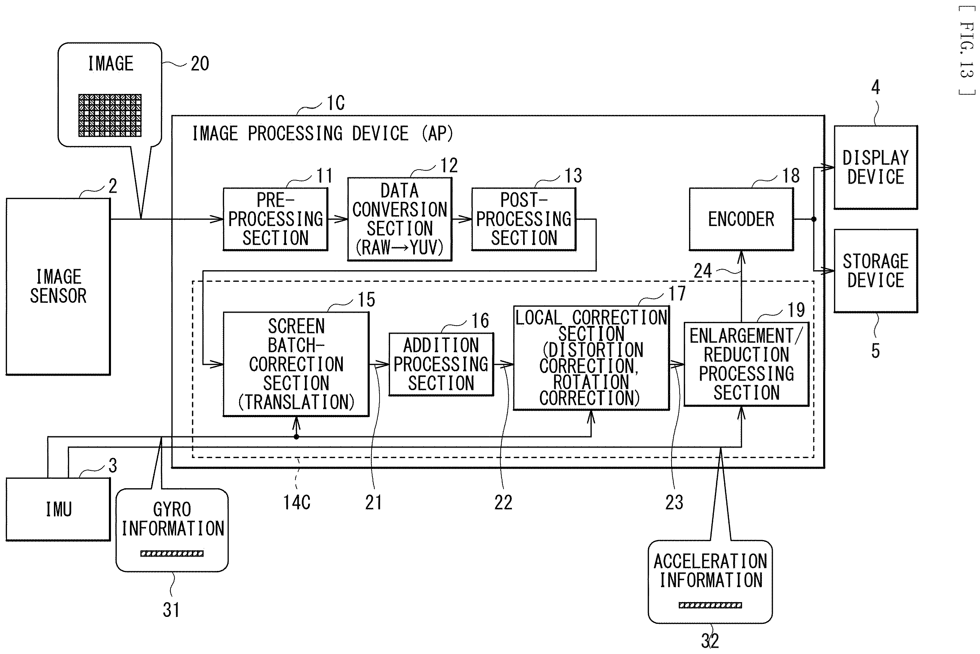

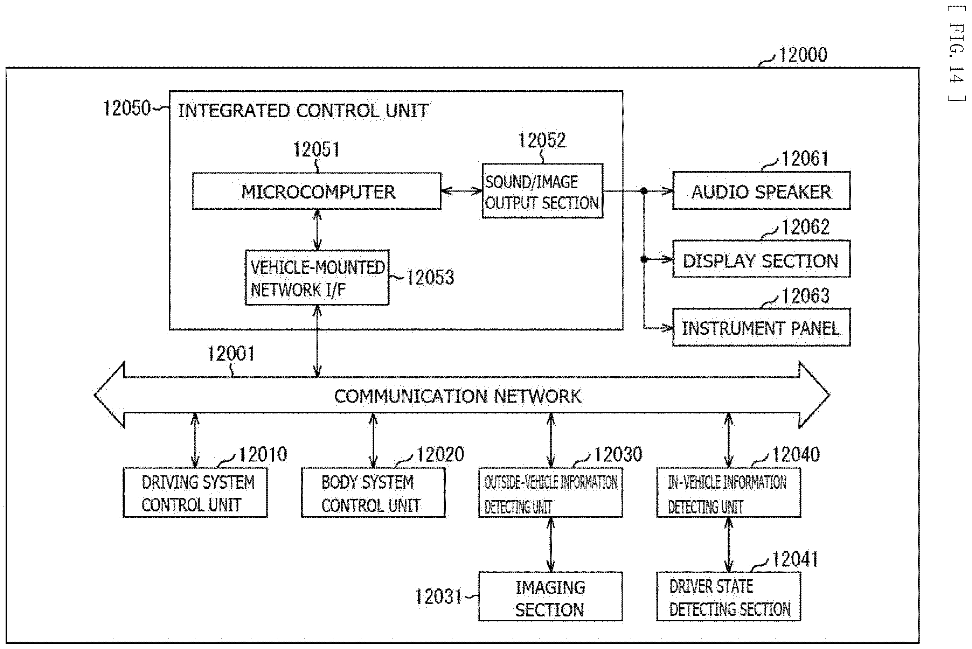

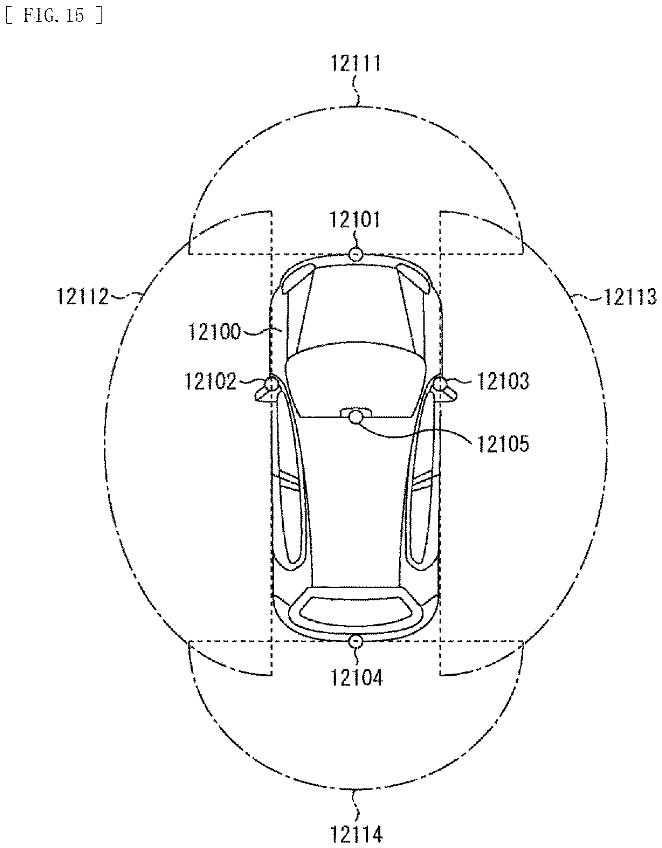

2. Second Embodiment (FIGs. 10 and 11)
3. Third Embodiment (FIGs. 12 and 13)
4. Example of Application to Mobile Body (FIGs. 14 and 15)
5. Other Embodiments

<0. Comparative Example>

(Outline and Problem of Image Processing Device according to Comparative Example)

FIG. 1 schematically illustrates an outline of typical electronic image stabilization.

According to the typical electronic image stabilization, as correction processing, mapping transformation processing including cropping, distortion correction processing, and rotation correction processing is performed on each of a plurality of captured images 200 ((A) of FIG. 1) obtained by shooting at a normal frame rate (for example, 30 fps) with an imaging device. As a result, a plurality of corrected images 201 of the normal frame rate is generated ((B) of FIG. 1).

With such typical electronic image stabilization, it is possible to correct an interframe blur; however, an intra-frame blur remains in a frame having large motion. This is noticeable in a dark place for which an exposure time per frame is long, in particular, and a blur starts to become conspicuous once the exposure time has reached about 10 ms, for example.

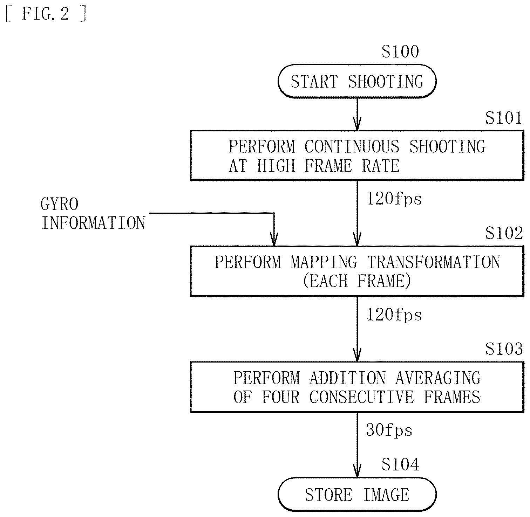

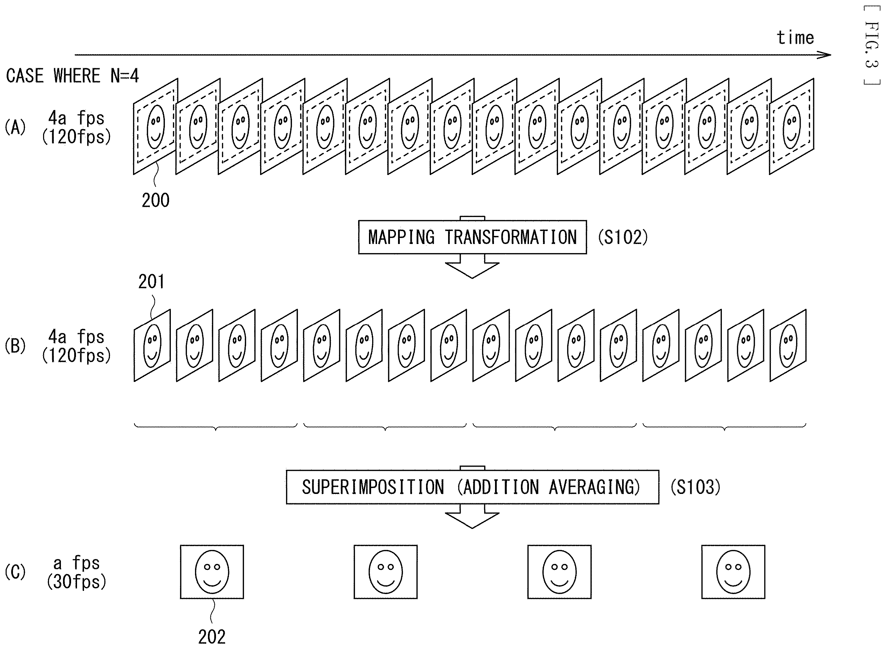

FIG. 2 illustrates an outline of an operation of an imaging system according to a comparative example that suppresses an intra-frame blur relative to the typical electronic image stabilization. FIG. 3 schematically illustrates an outline of correction processing on an image in an image processing device of the imaging system according to the comparative example.

The imaging system according to the comparative example includes, for example, an imaging device, a gyro sensor that outputs gyro information of the imaging device, the image processing device that performs the correction processing on a captured image provided by the imaging device, and a storage device that stores a corrected image provided by the image processing device.

In the imaging system according to the comparative example, shooting is started (step S100) by pressing of a shooting button of the imaging device, for example, and continuous shooting at a high frame rate is performed (step S101) at the imaging device. For example, in a case where a desired frame rate for final outputting at the image processing device is a (fps) ((C) of FIG. 3), the imaging device performs continuous shooting at an N times higher frame rate Na (fps) ((A) of FIG. 3). For example, in a case where N = 4 and the desired frame rate is 30 fps, the continuous shooting is performed at a high frame rate of 120 fps.

Next, on the basis of the gyro information from the gyro sensor, mapping transformation is performed (step S102) as the correction processing on each (each frame) of a plurality of captured images obtained by performing the continuous shooting at the high frame rate. As a result, a plurality of corrected images 201 having undergone the mapping transformation is generated ((B) of FIG. 3).

Next, at the image processing device, addition processing is performed on a predetermined number of consecutive frames of the plurality of corrected images 201 having undergone the mapping transformation (step S103). The addition processing is performed by determining an addition average of the predetermined number of consecutive frames. For example, in the case where N = 4, the addition processing is performed for every four frames. As a result, a corrected image 202 of the desired frame rate (for example, 30 fps) is obtained ((C) of FIG. 3). The image having undergone the correction processing by the image processing device is outputted to, for example, a storage device and is stored therein (step S104).

It is possible to acquire a moving image with reduced blur by, as described above, performing continuous shooting at a frame rate N times higher than a desired frame rate, performing image stabilization on each of a plurality of captured images that is N times greater in number than normal, and thereafter performing the addition processing of superimposing the N captured images on each other. However, although theoretically possible, this technique is not practical because the processing time increases in proportion to N, and therefore a heavy burden is placed on a processor in the image processing device.

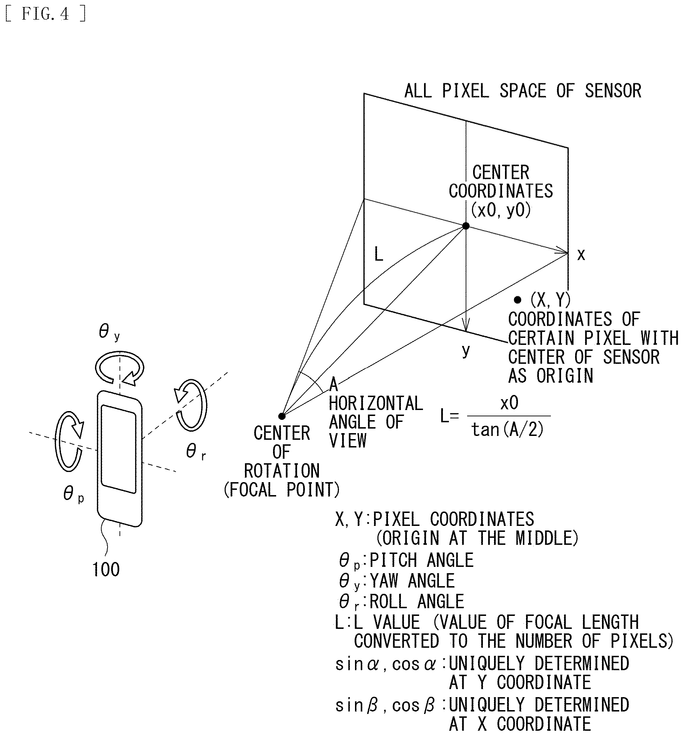

FIG. 4 schematically illustrates pixel coordinates (X, Y) upon the occurrence of hand-induced shake of an imaging device 100. An amount of movement ($\Delta X$, $\Delta Y$) of a pixel by triaxial rotation at the imaging device 100 is expressible by Equations (1). The mapping transformation in the image processing device according to the above-described comparative example is performable on the basis of Equations (1), for example. In this case, the gyro information includes information about a yaw (Yaw) angle $\theta y$, a pitch (Pitch) angle $\theta p$, and a roll (Roll) angle $\theta r$, which are angles of rotation around three axes. From Equations (1), the amount of movement ($\Delta X$, $\Delta Y$) of the pixel is uniquely determined on the basis of the information about the angles of rotation around the three axes.

[Math. 1]

$$\Delta X = \Delta X_p + \Delta X_y + \Delta X_r = \frac{\theta_p \cdot \sin \alpha}{\cos \alpha - \theta_p \cdot \sin \alpha} \cdot X + L \cdot \frac{X + L \cdot \theta_y}{L - X \cdot \theta_y} - Y \cdot \theta_r - X$$

$$\cdots (1)$$

$$\Delta Y = \Delta Y_p + \Delta Y_y + \Delta Y_r = L \cdot \frac{Y + L \cdot \theta_p}{L - Y \cdot \theta_p} + \frac{\theta_y \cdot \sin \beta}{\cos \beta - \theta_y \cdot \sin \beta} \cdot Y + X \cdot \theta_r - Y$$

Typically, such a mapping transformation involves three-dimensional geometric calculations on a pixel-by-pixel basis (or for each of predetermined pixel blocks), thus being heavy processing in many cases.

<1. First embodiment>

[1.1. Configuration]

FIG. 5 schematically illustrates a configuration example of an imaging system including an image processing device 1 according to a first embodiment of the present disclosure.

The imaging system includes the image processing device 1, an image sensor 2, an IMU (Inertial Measurement Unit, an inertial measurement unit) 3, a display device 4, and a storage device 5.

The image sensor 2 is configured by, for example, a CMOS (Complementary Metal Oxide Semiconductor) image sensor, and is able to perform continuous shooting at a high frame rate (for example, 120 fps). A plurality of captured images 20 obtained by performing the continuous shooting at the high frame rate with the image sensor 2 is outputted to the image processing device 1. The image sensor 2 corresponds to a specific example of an "imaging device " in the technology of the present disclosure.

The IMU 3 includes a gyro sensor and an acceleration sensor. The IMU 3 outputs gyro information 31 provided by the gyro sensor, as one of posture information.

The gyro information 31 is added to each of the plurality of captured images 20 obtained by the image sensor 2, and is outputted to the image processing device 1 together with the captured images 20. The plurality of captured images 20 each has a plurality of pixel lines. The gyro information 31 is associated with, for example, a predetermined pixel line among the plurality of pixel lines in each of the plurality of captured images 20. The gyro information 31 is able to be converted into gyro information for each pixel line of the captured images 20 on the side of the image processing device 1, for example.

The display device 4 performs image display based on image data outputted from the image processing device 1.

The storage device 5 includes a storage medium such as a semiconductor memory, for example, and stores the image data outputted from the image processing device 1.

The image processing device 1 is configured by, for example, an AP (Application Processor). The image processing device 1 includes a pre-processing section 11, a data conversion section 12, a post-processing section 13, a blur corrector 14, and an encoder 18.

The pre-processing section 11 performs processing such as defect pixel correction or NR (Noise Reduction) on a RAW (Raw image format) image signal corresponding to the plurality of captured images 20 outputted from the image sensor 2, and outputs the processed RAW image signal to the data conversion section 12.

The data conversion section 12 converts a RAW image into an RGB image by demosaic processing, further converts the RGB image into a YUV image by converting a color space, and outputs the YUV image to the post-processing section 13.

The post-processing section 13 performs processing including NR, color enhancement, and edge enhancement on the YUV image outputted from the data conversion section 12. The data of the plurality of captured images 20 having undergone the processing by the post-processing section 13 is outputted to the blur corrector 14.

The encoder 18 converts image data having undergone correction processing by the blur corrector 14 into image data in a data format suitable for image output to the display device 4 or the storage device 5, and outputs the converted image data.

The blur corrector 14 includes a screen batch-correction section 15, an addition processing section 16, and a local correction section 17.

The screen batch-correction section 15 corresponds to a specific example of a "first correction processing section" in the technology of the present disclosure. The screen batch-correction section 15 performs, on each of the plurality of captured images 20 captured by the image sensor 2, first correction processing on the basis of the gyro information 31, and generates a plurality of first corrected images. Here, the first correction processing is processing on the whole of the image, and includes, for example, image translation processing on the image. The screen batch-correction section 15 generates and outputs, for example, translated images 21 as the first corrected images.

The addition processing section 16 performs addition processing on at least two first corrected images among the plurality of first corrected images generated by the screen batch-correction section 15, and generates an addition image 22.

The local correction section 17 corresponds to a specific example of a "second correction processing section" in the technique of the present disclosure. The local correction section 17 performs, on the addition image 22 generated by the addition processing section 16, second correction processing higher in processing load than the first correction processing on the basis of the gyro information 31, and generates a second corrected image. Here, the second correction processing includes processing on each local portion of the image. The second correction processing includes, for example, distortion correction processing and rotation correction processing on the image. The local correction section 17 generates and outputs, for example, a distortion corrected/rotation corrected image 23 as the second corrected image.

[1.2. Operation]

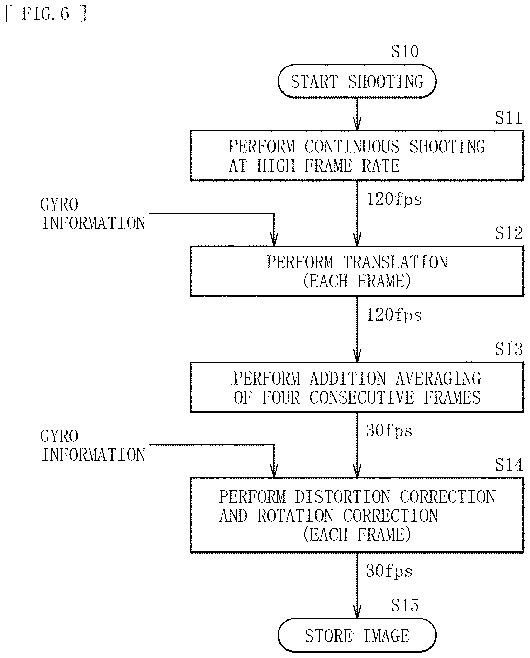

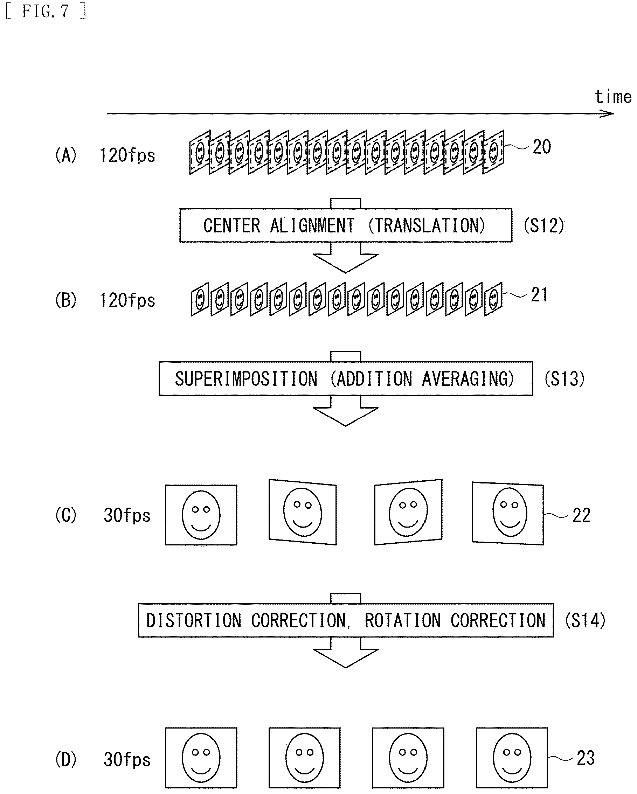

FIG. 6 illustrates an outline of an operation of the imaging system according to the first embodiment. FIG. 7 schematically illustrates an outline of the correction processing on images at the image processing device 1.

In the imaging system according to the first embodiment, for example, shooting is started (step S10) by pressing of an unillustrated shooting button, and continuous shooting at a high frame rate is performed (step S11) at the image sensor 2. For example, in a case where a desired frame rate for final outputting at the image processing device 1 is a (fps), the image sensor 2 performs continuous shooting at an N-times higher frame rate Na (fps). For example, in the case where N = 4 and the desired frame rate is 30 fps, the continuous shooting is performed at a high frame rate of 120 fps ((A) of FIG. 7).

Next, at the screen bath-correction section 15, translation processing is performed (step S12) on the basis of the gyro information 31 from the IMU 3 as the first correction processing on each (each frame) of a plurality of captured images 20 obtained by performing the continuous shooting at the high frame rate. As a result, a plurality of translated images 21 of the high frame rate of, for example, 120 fps, is generated ((B) of FIG. 7) on which the translation processing has been performed to allow respective center positions of the captured images 20 to coincide with each other.

Next, at the addition processing section 16, addition processing is performed on a predetermined number of consecutive frames of the plurality of translated images 21 (step S13). The addition processing is performed by determining an addition average of the predetermined number of consecutive frames. For example, in the case where N = 4, the addition processing is performed for every four frames. As a result, the addition image 22 of a desired frame rate (for example, 30 fps) is obtained ((C) of FIG. 7). It is to be noted that what is dominant as a difference between adjacent frames of the plurality of captured images 20 is a translation component, and therefore the addition image 22 after superimposition of the plurality of translated images 21 on each other is not an unnatural image.

Next, at the local correction section 17, distortion correction processing and rotation correction processing are performed as the second correction processing on the basis of the gyro information 31 on each (each frame) of a plurality of addition images 22 generated by the addition processing section 16 (step S14). As a result, the distortion corrected/rotation corrected image 23 of the desired frame rate (for example, 30 fps) is obtained ((D) of FIG. 7). In this way, by performing the distortion correction processing and the rotation correction processing, which are the heaviest processing, on the addition image 22 after the addition processing that is low in frame rate (for example, 30 fps), it is possible to reduce the processing load.

The distortion corrected/rotation corrected image 23 is outputted to the encoder 18 as a final image having undergone the correction processing by the blur corrector 14. The final image having undergone the correction processing is outputted via the encoder 18 to, for example, the storage device 5, and is stored therein (step S15).

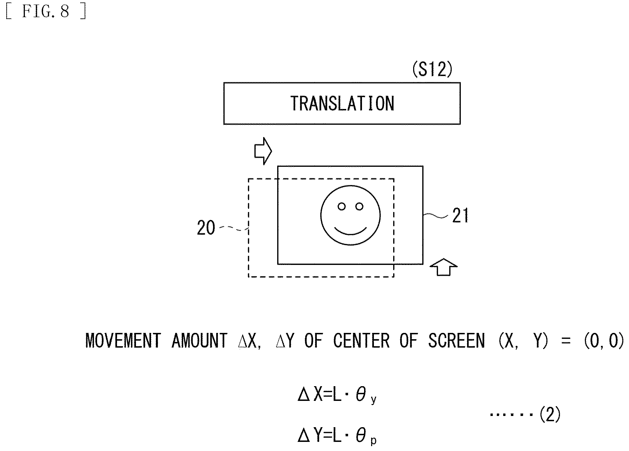

FIG. 8 schematically illustrates an outline of the translation processing on an image by the screen batch-correction section 15 of the image processing device 1.

The translation processing is performed on the basis of, for example, an amount of movement ($\Delta$X, $\Delta$Y) of a center of the screen (X, Y) = (0, 0). The amount of movement ($\Delta$X, $\Delta$Y) of the center of the screen (X, Y) = (0, 0) is expressed by Equations (2), as illustrated in FIG. 8, using an L value, and the yaw angle $\theta$y and the pitch angle $\theta$p (see FIG. 4) included in the gyro information 31.

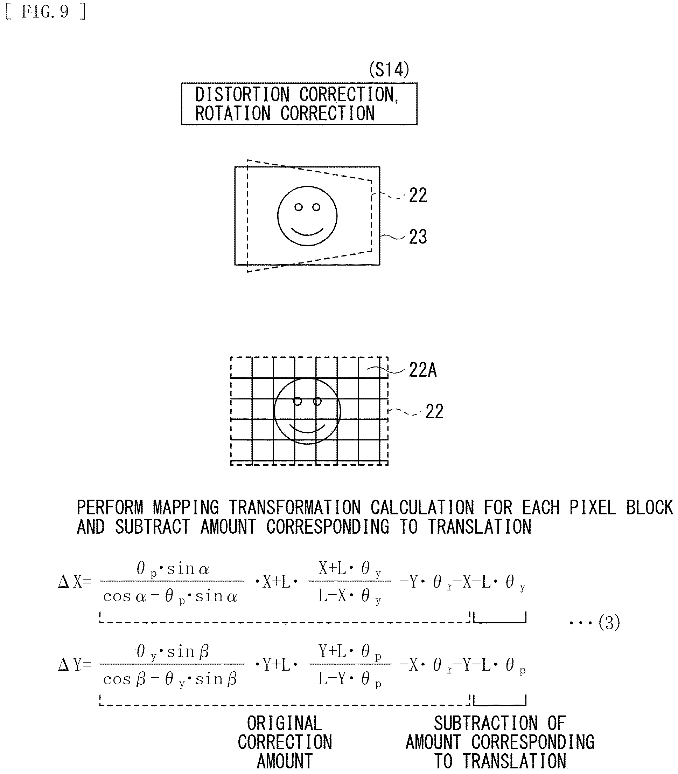

FIG. 9 schematically illustrates an outline of the distortion correction processing and the rotation correction processing on an image by the local correction section 17 of the image processing device 1.

The distortion correction processing and the rotation correction processing are performed for each predetermined pixel block 22A including a plurality of pixels, for example. The amount of movement $\Delta$X, $\Delta$Y for each pixel block 22A by the distortion correction processing and the rotation correction processing is expressible by Equations (3) as illustrated in FIG. 9. The parameters used in Equations (3) are as illustrated in FIG. 4. As indicated by Equations (3), the amount of movement $\Delta$X, $\Delta$Y for each pixel block 22A is obtained by performing mapping transformation calculation for each pixel block 22A and subtracting an amount corresponding to translation.

As described above, in the image processing device 1 according to the first embodiment, the mapping transformation is performed by dividing the processing into the translation processing that is light in load and the distortion correction processing and rotation correction processing that are heavy in load, in contrast to the correction processing (FIGs. 2 and 3) in the image processing device according to the comparative example described above. Only the distortion correction processing and the rotation correction processing are performed at a frame rate that has become 1/N after the addition processing. At this time, because distortion and rotation information is similar between consecutive frames before the addition processing, there is no problem even if an average value of correction amounts of the images targeted for the addition is used to perform the distortion-and-rotation correction on the images after the addition.

[1.3. Effects]

As described above, with the image processing device 1 according to the first embodiment, the addition image 22 is generated by performing the addition processing on at least two translated images 21 among the plurality of translated images 21 generated by the screen batch-correction section 15, and thereafter the addition image 22 is subjected to local correction processing (the distortion correction processing and the rotation correction processing) higher in processing load than the translation processing. This makes it possible to reduce load of correction processing on the plurality of captured images 20. For example, even if continuous shooting is performed at a frame rate N times higher than a desired frame rate, the time necessary for the entire correction processing is N times shorter compared with the image processing device according to the comparative example described above. Accordingly, it is possible to reduce a burden on the processor.

The image processing device 1 according to the first embodiment makes it possible greatly reduce the processing time of correction processing while maintaining blur-suppressing performance, thus allowing for real-time correction processing.

It is to be noted that the effects described in this specification are merely illustrative and non-limiting. In addition, there may be any other effect. This also holds true for the effects of the following other embodiments.

<2. Second Embodiment>

Next, an imaging system according to a second embodiment of the present disclosure will be described. It is to be noted that in the following, components substantially the same as those of the imaging system according to the first embodiment described above are denoted by the same reference signs, and the description thereof is omitted where appropriate.

FIG. 10 schematically illustrates a configuration example of the imaging system including an image processing device 1A according to the second embodiment.

In this imaging system, the IMU 3 outputs, as the posture information, the gyro information 31 provided by the gyro sensor and acceleration information 32 provided by the acceleration sensor.

Similarly to the gyro information 31, the acceleration information 32 is added to each of the plurality of captured images 20 obtained by the image sensor 2, and is outputted to the image processing device 1 together with the captured images 20. Similarly to the gyro information 31, the acceleration information 32 is associated with, for example, a predetermined pixel line among the plurality of pixel lines in each of the plurality of captured images 20. Similarly to the gyro information 31, the acceleration information 32 is able to be converted into acceleration information for each pixel line of the captured images 20 on the side of the image processing device 1, for example.

The image processing device 1A according to the second embodiment further includes an enlargement/reduction correction section 19 in a blur corrector 14A, relative to the configuration of the image processing device 1 illustrated in FIG. 5.

In the image processing device 1A according to the second embodiment, the local correction section 17 and the enlargement/reduction correction section 19 correspond to a specific example of the "second correction processing section" in the technology according to the present disclosure. In the image processing device 1A, the distortion correction processing and the rotation correction processing by the local correction section 17, and enlargement/reduction correction processing by the enlargement/reduction correction section 19 are performed as the second correction processing. The enlargement/reduction correction section 19 generates and outputs an enlargement/reduction-corrected image 24 as the second corrected image. The enlargement/reduction correction processing by the enlargement/reduction correction section 19 is performed on the basis of the acceleration information 32.

FIG. 11 illustrates an outline of an operation of the imaging system according to the second embodiment.

In FIG. 11, the processing from step S10 to step S14 is substantially similar to the processing (FIG. 6) by the imaging system according to the first embodiment.

In the imaging system according to the second embodiment, the enlargement/reduction correction processing is performed (step S14A) on the basis of the acceleration information 32 on each (each frame) of a plurality of distortion corrected/rotation corrected images 23 obtained by the processing of step S14. As a result, the enlargement/reduction-corrected image 24 of a desired frame rate (for example, 30 fps) is obtained.

The enlargement/reduction-corrected image 24 is outputted to the encoder 18 as a final image having undergone the correction processing by the blur corrector 14A. The final image having undergone the correction processing is outputted via the encoder 18 to, for example, the storage device 5, and is stored therein (step S15).

(Modification Example)

Relative to the configuration illustrated in FIG. 10, the enlargement/reduction correction section 19 may be provided in front of the local correction section 17, and the enlargement/reduction correction processing may thus be performed prior to the distortion correction processing and the rotation correction process by the local correction section 17. In this case, the final image after the correction processing by the blur corrector 14A is the distortion corrected/rotation corrected image 23 generated after the enlargement/reduction correction processing is performed.

The other configurations, operations, and effects may be substantially similar to those of the imaging system according to the first embodiment described above.

<3. Third Embodiment>

Next, an imaging system according to a third embodiment of the present disclosure will be described. It is to be noted that in the following, components substantially the same as those of the imaging system according to the first or second embodiment described above are denoted by the same reference signs, and the description thereof is omitted where appropriate.

(First Configuration Example)

FIG. 12 schematically illustrates a first configuration example of the imaging system including an image processing device 1B according to the third embodiment. The image processing device 1B includes a blur corrector 14B.
In the imaging system according to the first embodiment (FIG. 5), the gyro information 31 from the IMU 3 is added to each of the plurality of captured images 20 obtained by the image sensor 2, and is outputted to the image processing device 1 together with the captured images 20. In contrast, in the imaging system illustrated in FIG. 12, the gyro information 31 from the IMU 3 is outputted to the image processing device 1B separately from the plurality of captured images 20 obtained by the image sensor 2. In the imaging system illustrated in FIG. 12, a time stamp is assigned to each of the plurality of pixel lines in each of the plurality of captured images 20. In a similar manner, a time stamp corresponding to each of the plurality of pixel lines is assigned to the gyro information 31. As a result, on the side of the image processing device 1B, it is possible to associate each pixel line of the captured images 20 and the gyro information 31 with each other on the basis of the time stamp.
The other configurations, operations, and effects may be substantially similar to those of the imaging system according to the first embodiment described above.

(Second Configuration Example)

FIG. 13 schematically illustrates a second configuration example of the imaging system including an image processing device 1C according to the third embodiment. The image processing device 1C includes a blur corrector 14C.
In the imaging system according to the second embodiment (FIG. 10), the gyro information 31 and the acceleration information 32 from the IMU 3 are added to each of the plurality of captured images 20 obtained by the image sensor 2, and are outputted to the image processing device 1A together with the captured images 20. In contrast, in the imaging system illustrated in FIG. 13, the gyro information 31 and the acceleration information 32 from the IMU 3 are outputted to the image processing device 1C separately from the plurality of captured images 20 obtained by the image sensor 2. In the imaging system illustrated in FIG. 13, a time stamp is assigned to each of the plurality of pixel lines in each of the plurality of captured images 20. In a similar manner, a time stamp corresponding to each of the plurality of pixel lines is assigned to the gyro information 31 and the acceleration information 32. As a result, on the side of the image processing device 1C, it is possible to associate the gyro information 31 and the acceleration information 32 with each pixel line of the captured images 20 on the basis of the time stamp.
The other configurations, operations, and effects may be substantially similar to those of the imaging system according to the second embodiment described above.

<4. Example of Application to Mobile Body>

The technology according to the present disclosure is applicable to a variety of products. For example, the technology according to the present disclosure may be achieved as a device mounted on any type of mobile body such as an automobile, an electric vehicle, a hybrid electric vehicle, a motorcycle, a bicycle, a personal mobility, an airplane, a drone, a vessel, or a robot.
FIG. 14 is a block diagram depicting an example of schematic configuration of a vehicle control system as an example of a mobile body control system to which the technology according to an embodiment of the present disclosure can be applied.
The vehicle control system 12000 includes a plurality of electronic control units connected to each other via a communication network 12001. In the example depicted in FIG. 14, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.
The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.
The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automatic driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 14, an audio speaker 12061, a display section 12062, and an instrument panel 12063 are illustrated as the output device. The display section 12062 may, for example, include at least one of an on-board display and a head-up display.

FIG. 15 is a diagram depicting an example of the installation position of the imaging section 12031.

In FIG. 15, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 15 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automatic driving that makes the vehicle travel autonomously without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

In the vehicle control system 12000 described above, the image processing device of the present disclosure is applicable to the outside-vehicle information detecting unit 12030, for example. Applying the technology according to the present disclosure to the outside-vehicle information detecting unit 12030 allows for real-time processing of blur correction for images captured by the imaging section 12031. This makes it possible to improve the processing speed of the detection processing for an object or the like outside the vehicle.

<5. Other Embodiments>

The technology according to the present disclosure is not limited to the description of the embodiments given above, and may be modified in a variety of ways.

**Claims**

**1.** An image processing device (1) comprising:

a first correction processing section (15) that performs, on each of a plurality of captured images (20) captured by an imaging device (2) at a first frame rate, first correction processing on a basis of posture information (31) of the imaging device (2) and generates a plurality of first corrected images (21) at the first frame rate;
an addition processing section (16) that performs addition processing on at least two first corrected images (21) among the plurality of first corrected images (21) generated by the first correction processing section (15) and generates an addition image (22) at a second frame rate; and

a second correction processing section (17) that performs, on the addition image (22) generated by the addition processing section (16), second correction processing higher in processing load than the first correction processing and generates a second corrected image (23) at the second frame rate,

wherein the first correction processing includes translation processing on a whole of the image (20), and

the second correction processing includes processing the addition image by distortion correction processing, rotation correction processing and by subtracting an amount corresponding to the translation processing, and

the first frame rate equals N*a, wherein a is the second frame rate and corresponds to a frame rate for final outputting at the image processing device (1) and N>1.

2. The image processing device (1) according to claim 1, wherein the second correction processing includes processing on each local portion (22A) of the image (22).

3. The image processing device (1) according to any of the preceding claims, wherein the second correction processing further includes enlargement/reduction correction processing on the image (22).

4. The image processing device (1) according to any of the preceding claims, wherein the posture information (31) is added to each of the plurality of captured images (20).

5. The image processing device (1) according to any of the preceding claims, wherein

the plurality of captured images (20) each has a plurality of pixel lines, and

the posture information (31) is associated with a predetermined pixel line among the plurality of pixel lines in each of the plurality of captured images (20).

6. The image processing device (1) according to any of claims 1 to 3, wherein

the plurality of captured images (20) each has a plurality of pixel lines,

a time stamp is assigned to each of the plurality of pixel lines in each of the plurality of captured images (20), and

a time stamp corresponding to each of the plurality of pixel lines is assigned to the posture information (31).

7. The image processing device (1) according to any of the preceding claims, wherein the posture information (31) includes gyro information provided by a gyro sensor, acceleration information provided by an acceleration sensor, or both.

**Patentansprüche**

1. Bildverarbeitungsvorrichtung (1), umfassend:

einen ersten Korrekturverarbeitungsabschnitt (15), der an jedem einer Vielzahl von aufgenommenen Bildern (20), die durch eine Bildgebungsvorrichtung (2) mit einer ersten Bildfrequenz aufgenommen wurden, eine erste Korrekturverarbeitung auf einer Basis von Haltungsinformationen (31) der Bildgebungsvorrichtung (2) durchführt und eine Vielzahl von ersten korrigierten Bildern (21) mit der ersten Bildfrequenz erzeugt;

einen Additionsverarbeitungsabschnitt (16), der eine Additionsverarbeitung an mindestens zwei ersten korrigierten Bildern (21) aus der Vielzahl von durch den ersten Korrekturverarbeitungsabschnitt (15) erzeugten ersten korrigierten Bilder (21) durchführt und ein Additionsbild (22) mit einer zweiten Bildfrequenz erzeugt; und

einen zweiten Korrekturverarbeitungsabschnitt (17), der an dem durch den Additionsverarbeitungsabschnitt (16) erzeugten Additionsbild (22) eine zweite Korrekturverarbeitung durchführt, deren Verarbeitungslast höher ist als die der ersten Korrekturverarbeitung, und ein zweites korrigiertes Bild (23) mit der zweiten Bildfrequenz erzeugt,

wobei die erste Korrekturverarbeitung eine Verschiebungsverarbeitung des gesamten Bildes (20) einschließt, und

die zweite Korrekturverarbeitung die Verarbeitung des Additionsbildes durch eine Verzerrungskorrekturverarbeitung, eine Rotationskorrekturverarbeitung und durch Subtrahieren eines Betrags entsprechend der Verschiebungsverarbeitung einschließt,

und

die erste Bildfrequenz gleich N*a ist, wobei a die zweite Bildfrequenz ist und einer Bildfrequenz zum endgültigen Ausgeben an der Bildverarbeitungsvorrichtung (1) entspricht und N > 1 ist.

**2.** Bildverarbeitungsvorrichtung (1) nach Anspruch 1, wobei die zweite Korrekturverarbeitung das Verarbeiten jedes lokalen Abschnitts (22A) des Bildes (22) einschließt.

**3.** Bildverarbeitungsvorrichtung (1) nach einem der vorstehenden Ansprüche, wobei die zweite Korrekturverarbeitung ferner eine Vergrößerungs- /Verkleinerungskorrekturverarbeitung an dem Bild (22) einschließt.

**4.** Bildverarbeitungsvorrichtung (1) nach einem der vorstehenden Ansprüche, wobei die Haltungsinformationen (31) zu jedem der Vielzahl von aufgenommenen Bildern (20) hinzugefügt werden.

**5.** Bildverarbeitungsvorrichtung (1, 2b) nach einem der vorstehenden Ansprüche, wobei

die Vielzahl von aufgenommenen Bildern (20) jeweils eine Vielzahl von Pixelzeilen aufweist, und
die Haltungsinformationen (31) einer vorbestimmten Pixelzeile aus der Vielzahl von Pixelzeilen in jedem der Vielzahl von aufgenommenen Bildern (20) zugeordnet sind.

**6.** Bildverarbeitungsvorrichtung (1) nach einem der Ansprüche 1 bis 3, wobei

die Vielzahl von aufgenommenen Bildern (20) jeweils eine Vielzahl von Pixelzeilen aufweist,
jeder der Vielzahl von Pixelzeilen in jedem der Vielzahl von aufgenommenen Bildern (20) ein Zeitstempel zugewiesen ist, und
den Haltungsinformationen (31) ein Zeitstempel zugewiesen ist, der jeder der Vielzahl von Pixelzeilen entspricht.

**7.** Bildverarbeitungsvorrichtung (1) nach einem der vorstehenden Ansprüche, wobei die Haltungsinformationen (31) durch einen Gyrosensor bereitgestellte Gyroinformationen, durch einen Beschleunigungssensor bereitgestellte Beschleunigungsinformationen oder beides einschließen.

**Revendications**

**1.** Dispositif de traitement d'image (1) comprenant :

une première section de traitement de correction (15) qui effectue, sur chacune d'une pluralité d'images capturées (20) par un dispositif d'imagerie (2) à une première fréquence d'images, un premier traitement de correction sur la base des informations de posture (31) du dispositif d'imagerie (2) et génère une pluralité de premières images corrigées (21) à la première fréquence de trames ;
une section de traitement d'addition (16) qui effectue un traitement d'addition sur au moins deux premières images corrigées (21) parmi la pluralité de premières images corrigées (21) générées par la première section de traitement de correction (15) et génère une image d'addition (22) à une seconde fréquence de trames ; et
une seconde section de traitement de correction (17) qui effectue, sur l'image d'addition (22) générée par la section de traitement d'addition (16), un second traitement de correction dont la charge de traitement est supérieure à celle du premier traitement de correction et qui génère une seconde image corrigée (23) à la seconde fréquence de trames,
dans lequel le premier traitement de correction comporte un traitement de translation sur l'ensemble de l'image (20), et
le second traitement de correction comporte le traitement de l'image d'addition par un traitement de correction de la distorsion, un traitement de correction de la rotation et la soustraction d'un montant correspondant au traitement de la translation,
et
la première fréquence de trames est égale à N*a, dans lequel a est la seconde fréquence de trames et correspond à une fréquence de trames pour la sortie finale au niveau du dispositif de traitement d'images (1) et N > 1.

**2.** Dispositif de traitement d'images (1) selon la revendication 1, dans lequel le second traitement de correction comporte un traitement sur chaque partie locale (22A) de l'image (22).

**3.** Dispositif de traitement d'images (1) selon l'une quelconque des revendications précédentes, dans lequel le second traitement de correction comporte en outre un traitement de correction d'agrandissement/réduction sur l'image (22).

4. Dispositif de traitement d'images (1) selon l'une quelconque des revendications précédentes, dans lequel les informations relatives à la posture (31) sont ajoutées à chacune des images capturées (20).

5. Dispositif de traitement d'images (1) selon l'une quelconque des revendications précédentes, dans lequel

   la pluralité d'images capturées (20) a chacune une pluralité de lignes de pixels, et
   les informations sur la posture (31) sont associées à une ligne de pixels prédéterminée parmi la pluralité de lignes de pixels dans chacune de la pluralité d'images capturées (20).

6. Dispositif de traitement d'images (1) selon l'une quelconque des revendications 1 à 3, dans lequel

   la pluralité d'images capturées (20) comporte chacune une pluralité de lignes de pixels,
   un horodatage est attribué à chacune de la pluralité de lignes de pixels de la pluralité d'images capturées (20), et
   un horodatage correspondant à chacune de la pluralité de lignes de pixels est attribué aux informations sur la posture (31).

7. Dispositif de traitement d'images (1) selon l'une quelconque des revendications précédentes, dans lequel les informations sur la posture (31) comportent des informations sur le gyroscope fournies par un capteur de gyroscope, des informations sur l'accélération fournies par un capteur d'accélération, ou les deux.

[ FIG. 1 ]

[ FIG. 2 ]

S100
( START SHOOTING )

↓ S101

PERFORM CONTINUOUS SHOOTING
AT HIGH FRAME RATE

120fps

GYRO
INFORMATION ───────┐

↓ ↓ S102

PERFORM MAPPING TRANSFORMATION
(EACH FRAME)

120fps

↓ S103

PERFORM ADDITION AVERAGING
OF FOUR CONSECUTIVE FRAMES

30fps

↓ S104

( STORE IMAGE )

[ FIG. 3 ]

EP 3 905 656 B1

time

CASE WHERE N=4

(A)  4a fps
     (120fps)

200

MAPPING TRANSFORMATION  (S102)

201

(B)  4a fps
     (120fps)

SUPERIMPOSITION (ADDITION AVERAGING)  (S103)

(C)  a fps
     (30fps)

202

[ FIG. 4 ]

ALL PIXEL SPACE OF SENSOR

CENTER COORDINATES (x0, y0)

x

L

● (X, Y)
COORDINATES OF CERTAIN PIXEL WITH CENTER OF SENSOR AS ORIGIN

y

A
HORIZONTAL ANGLE OF VIEW

$L = \dfrac{x0}{\tan(A/2)}$

CENTER OF ROTATION (FOCAL POINT)

$\theta_y$

$\theta_r$

$\theta_p$

100

X, Y: PIXEL COORDINATES
(ORIGIN AT THE MIDDLE)
$\theta_p$: PITCH ANGLE
$\theta_y$: YAW ANGLE
$\theta_r$: ROLL ANGLE
L: L VALUE (VALUE OF FOCAL LENGTH
CONVERTED TO THE NUMBER OF PIXELS)
$\sin\alpha, \cos\alpha$: UNIQUELY DETERMINED
AT Y COORDINATE
$\sin\beta, \cos\beta$: UNIQUELY DETERMINED
AT X COORDINATE

17

[ FIG. 5 ]

[ FIG.6 ]

S10

( START SHOOTING )

↓

S11

PERFORM CONTINUOUS SHOOTING
AT HIGH FRAME RATE

GYRO
INFORMATION

120fps

↓                    ↓

S12

PERFORM TRANSLATION
(EACH FRAME)

120fps

↓

S13

PERFORM ADDITION AVERAGING
OF FOUR CONSECUTIVE FRAMES

GYRO
INFORMATION

30fps

↓                    ↓

S14

PERFORM DISTORTION CORRECTION
AND ROTATION CORRECTION
(EACH FRAME)

30fps

↓

S15

( STORE IMAGE )

[ FIG. 7 ]

(A) 120fps — 20

CENTER ALIGNMENT (TRANSLATION) (S12)

(B) 120fps — 21

SUPERIMPOSITION (ADDITION AVERAGING) (S13)

(C) 30fps — 22

DISTORTION CORRECTION, ROTATION CORRECTION (S14)

(D) 30fps — 23

[ FIG. 8 ]

(S12)

TRANSLATION

20 — 21

MOVEMENT AMOUNT $\triangle X$, $\triangle Y$ OF CENTER OF SCREEN $(X, Y) = (0,0)$

$$\triangle X = L \cdot \theta_y$$

$$\triangle Y = L \cdot \theta_p$$

$\cdots\cdots (2)$

[ FIG. 9 ]

(S14)

DISTORTION CORRECTION,
ROTATION CORRECTION

PERFORM MAPPING TRANSFORMATION CALCULATION FOR EACH PIXEL BLOCK
AND SUBTRACT AMOUNT CORRESPONDING TO TRANSLATION

$$\Delta X = \frac{\theta_p \cdot \sin\alpha}{\cos\alpha - \theta_p \cdot \sin\alpha} \cdot X + L \cdot \frac{X + L \cdot \theta_y}{L - X \cdot \theta_y} - Y \cdot \theta_r - X - L \cdot \theta_y$$

$$\cdots (3)$$

$$\Delta Y = \frac{\theta_y \cdot \sin\beta}{\cos\beta - \theta_y \cdot \sin\beta} \cdot Y + L \cdot \frac{Y + L \cdot \theta_p}{L - Y \cdot \theta_p} - X \cdot \theta_r - Y - L \cdot \theta_p$$

ORIGINAL
CORRECTION
AMOUNT

SUBTRACTION OF
AMOUNT CORRESPONDING
TO TRANSLATION

[ FIG. 10 ]

[ FIG. 11 ]

S10
( START SHOOTING )

S11
PERFORM CONTINUOUS SHOOTING
AT HIGH FRAME RATE

120fps

GYRO
INFORMATION

S12
PERFORM TRANSLATION
(EACH FRAME)

120fps

S13
PERFORM ADDITION AVERAGING
OF FOUR CONSECUTIVE FRAMES

30fps

GYRO
INFORMATION

S14
PERFORM DISTORTION CORRECTION
AND ROTATION CORRECTION
(EACH FRAME)

30fps

ACCELARATION
INFORMATION

S14A
PERFORM ENLARGEMENT/
REDUCTION CORRECTION
(EACH FRAME)

30fps

S15
( STORE IMAGE )

[ FIG. 12 ]

[ FIG. 13 ]

EP 3 905 656 B1

[ FIG. 14 ]

[ FIG. 15 ]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009105533 A
- WO 2017187691 A1
- JP 2017058660 A